**Europäisches Patentamt**

**European Patent Office**

**Office européen des brevets**

(11) Veröffentlichungsnummer: **0 027 176**
**B1**

(12) **EUROPÄISCHE PATENTSCHRIFT**

(45) Veröffentlichungstag der Patentschrift: **30.01.85**

(51) Int. Cl.⁴: **C 08 J 3/08**

(21) Anmeldenummer: **80105332.3**

(22) Anmeldetag: **06.09.80**

(54) **Verfahren zur Herstellung von Dispersionen aus hochmolekularen, kristallisierbaren Polyestern sowie deren Verwendung für Überzüge und Lackierungen.**

(30) Priorität: **03.10.79 DE 2940072**

(43) Veröffentlichungstag der Anmeldung:
**22.04.81 Patentblatt 81/16**

(45) Bekanntmachung des Hinweises auf die
Patenterteilung:
**30.01.85 Patentblatt 85/05**

(84) Benannte Vertragsstaaten:
**BE CH DE FR GB IT LI NL**

(56) Entgegenhaltungen:
**DE-A-2 632 031**
**US-A-3 935 169**

**CHEMICAL ABSTRACTS, Band 85, Nr. 18, 1.
November 1976, Seite 72, Zusammenfassung
Nr. 125367m, Columbus, Ohio, US**

**Die Akte enthält technische Angaben, die nach
dem Eingang der Anmeldung eingereicht
wurden und die nicht in dieser Patentschrift
enthalten sind.**

(73) Patentinhaber: **DYNAMIT NOBEL
AKTIENGESELLSCHAFT**
**Postfach 1209**
**D-5210 Troisdorf, Bez. Köln (DE)**

(72) Erfinder: **Schade, Gerhard, Dr.**
**Akazienweg 13**
**D-5810 Witten/Ruhr (DE)**
Erfinder: **Kühnrich, Robert**
**Kiesenfeldweg 69**
**D-4353 Oer-Erkenschwick (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 027 176 B1

## Beschreibung

Die Erfindung betrifft die Herstellung von Dispersionen aus hochmolekularen Polyestern, welche durch Anordnung der Polyesterketten kristallinen oder teilkristallinen Charakter haben.

Nicht-wässrige Dispersionen von Polymeren sind bereits seit längerem bekannt; sie sind u.a. beschrieben in einem Übersichtsartikel von R. Dowbenko und D. P. Hart: "Nonaqueous Dispersions as Vehicles for Polymer Coatings" Ind. Eng. Prod. Res. Develop., Vol. 12, No. 1, 1973, Seiten 14—28. Die Herstellung dieser Dispersionen erfolgt stets durch Polymerisation von Monomeren, welche olefinische Doppelbindungen enthalten, mit Hilfe von Flüssigkeiten, die zwar die Monomeren, nicht aber die Polymeren lösen. Ein solches Verfahren ist aber dann nicht anwendbar, wenn die dispergiert vorliegenden Monomeren nicht durch Polymerisation, sondern durch thermische Polykondensation, zu Hochmolekularen umgesetzt werden sollen.

Um hochpolymere Stoffe nachträglich in Dispersionen zu überführen, wurde bereits vorgeschlagen, speziell Polyäthylen oder Aethylen-Copolymerisate in einer geeigneten Flüssigkeit in der Hitze zu lösen und durch Abkühlen wieder auszufällen, wobei man nach Filtration relative feinkörnige Pulver erhält (FR—PS 945 962). Geschieht das Abkühlen sehr schnell und beträgt die Konzentration des Polymeren nicht mehr als 8 bzw. 5 Gew.-%, so erhält man sehr feinteilige, stabile Dispersionen (DE—OS 28 14 030).

Diesem letztgenannten Verfahren haften die Nachteile an, daß man zum Zweck des sehr schnellen Abkühlens aufwendige Vorrichtungen benötigt, und daß Dispersionen mit nur extrem niedrigen Festkörpergehalt erhalten werden können, deren Verwendung unwirtschaftlich ist.

Es war auch aus der DE—OS 26 32 031 bekannt, Polyethylen unter Druck in niedrig siedenden Lösungsmitteln zu lösen und beim Abkühlen also wieder verwendbare Pulver auszufällen. Eine Dispersion entsteht dabei nicht.

Im Fall, daß die zu dispergierenden Polymeren spröde Hartharze darstellen, ist es auch möglich, diese durch mechanisches Zerkleinern dispergierbar zu machen (vgl. z.B. DE—OS 22 10 484).

Bei Hochpolymeren ist die Erzielung der erforderlichen Feinheitsgrade durch Mahlung auch bei Kühlung des Mahlgutes durch verflüssigten Stickstoff im allgemeinen nicht oder nur unter kaum vertretbarem Aufwand durch Klassierung des Mahlgutes und ständige Rückführung des noch zu groben Anteils möglich.

Weiter ist es bekannt, daß hochmolekulare, amorphe Polyester in Kombination mit geeigneten Triazinharzen in üblichen Lacklösungsmitteln gelöst und ggf. mit weiteren Zusatzstoffen versetzt, nach dem Einbrennen auf Blechen sterilisierbare Überzüge ergeben (DE—OS 18 07 776 und DE—OS 21 26 048). Diese Sterilisierbarkeit ist jedoch im allgemeinen nur dann befriedigend, wenn reines Wasser als Sterilisierflüssigkeit verwendet wird; enthält das also Sterilisierflüssigkeit verwendete Wasser aber in Lebensmitteln, vorhandene Genußsäuren wie Milch-, Zitronen-, Wein oder Essigsäure, so ist eine hinreichende Resistenz der Überzüge bei der Sterilisierung nicht mehr gewährleistet.

Im Gegensatz zu den nach DE—OS 18 07 776 und DE—OS 21 26 048 aus Gründen der Löslichkeit allein verwendbaren amorphen Polyestern zeigen kristalline Polyester, wie sie z.B. in DE—AS 23 46 559 beschrieben sind, eine weit überlegene Sterilisierbarkeit daraus hergestellter Überzüge.

Diese kristallinen Polyester können jedoch infolge ihrer grundsätzlich nicht zu behebenden Unlöslichkeit in den überlichen Lacklösungsmitteln, wie Estern, Alkoholen, Ketonen und Kohlenwasserstoffen, bisher nicht als Lackrohstoff verwendet, sondern ausschließlich nach den bekannten Pulverschmelzverfahren, wie insbesondere das Wirbelsinteroder das elektrostatische Pulversprühverfahren, zur Oberflächenbeschichtung herangezogen werden. Diese Verfahren sind jedoch nicht in allen Fällen anwendbar, was besonders nachteilig ist, wenn man den Vorteil ihrer überlegenen Sterilisierbarkeit praktisch ausnutzen will, beispielsweise bei der Innenbeschichtung von Konservendosen oder bei der Beschichtung von Blechen, aus denen nachträglich Konservendosen hergestellt werden sollen.

Aufgabe der Erfindung ist es daher, hochmolekulare, kristallisierbare Polyester in Dispersionen zu überführen, die nach den üblichen Methoden der Naßlackierung appliziert und durch anschließendes Erwärmen zu sterilisierbaren Überzügen eingebrannt werden können.

Die gefundene Lösung dieser Aufgabe besteht darin, daß lineare, gesättigte hochmolekulare, kristallisierbare Polyester in einer hochsiedenden organischen Flüssigkeit, deren Siedepunkt bei oder über dem Schmelzpunkt der Polyester liegt, und wobei das Gewichtsverhältnis von Polyester zu der hochsiedenden Flüssigkeit zwischen 60/40 und 40/60, vorzugsweise 55/45 bis 45/55 beträgt, auf eine Temperatur erhitzt werden, die bei oder oberhalb des Schmelzpunktes, des Polyesters, der gegebenenfalls durch Anquellung des Polyesters durch die hochsiedende Flüssigkeit auch erniedrigt sein kann, aber unterhalb der Siedetemperatur der hochsiedenden Flüssigkeit liegt, bis eine homogene Phase entstanden ist, und daß man unter Rühren soweit abkühlt, daß das Material noch rühr- oder fließfähig ist, und darauf entweder a) ohne weiteres Rühren das Material abkühlen und erstarren läßt oder b) bevor oder während eine weitere Abkühlung erfolgt, das noch rühr- oder fließfähige Material unter Rühren mit weiteren Mengen der hochsiedenden organischen Flüssigkeiten oder mit damit mischbaren Flüssigkeiten, gegebenenfalls unter Verwendung bekannter Dispergiervorrichtungen, verdünnt.

Das noch rührfähige bzw. fließfähige Gemisch hat im allgemeinen eine Temperatur zwischen 100 und 150°C, besonders 100 bis 120°C, kann jedoch in Sonderfällen darunter oder darüber liegende Temperaturen haben.

Die nach a) erkaltende bzw. erstarrende Mischung braucht im allgemeinen nicht mehr gerührt zu werden und erstarrt zu Massen von teig-, wachs- oder kittartiger Konsistenz. Dann ist est jedoch im allgemeinen erforderlich, bei der weiteren Verdünnung die sich in der erkalteten Masse bildenden sekundären Agglomerate durch bekannte Dispergiervorrichtungen zu zerteilen.

In vielen Fällen ist daher der Verfahrensweg b) bevorzugt, da sich die noch warme und nicht erstarrte Masse durch verdünnen leichter handhaben läßt und so stabilere fertige oder noch auf die applizierbaren Dispersionen weiter zu verdünnende Mischungen erhalten werden.

Daß aus der im allgemeinen klaren Lösung primär entstehende noch rührbare bzw. fließfähige Product hat überraschend Partikel eines mittleren Durchmessers von gleich oder weniger als 5 $\mu$m, so daß damit ein wesentlicher Teil der Aufgabe gelöst ist, den Polyester in einen dispergierbaren Zustand zu überführen.

Die Menge der hochsiedenden organischen Flüssigkeiten zur Bildung der homogenen rührbaren heißen Mischung sollte die angegebenen Mengenverhältnisse zum Polyester nicht oder nicht wesentlich über—oder unterschreiten, da im anderen Falle die genannte Kornfeinheit zumeist abnimmt.

Die weitere Menge der nach dem Verfahrensweg b) zusetzbaren hochsiedenden organischen Flüssigkeiten ist jedoch nicht kritisch, sollte jedoch zur Beibehaltung der Rührfähigkeit der Polyester-Dispersion bei der jeweiligen Temperatur ausreichen, so daß insgesamt—zur Herstellung des primären Products und dem nach Verfahrensweg b)—insgesamt etwa 100 bis 400 Teile hochsiedende Flüssigkeit je 100 Teile Polyester verwendet werden.

Gleiche Mengen kommen in Frage, soweit nach Verfahrensweg b) eine mit der hochsiedenden organischen Flüssigkeit mischbare Flüssigkeit verwendet wird sowie bei der Verdünnung abgekühlter Massen nach dem Verfahrensanspruch 2.

Die mischbaren Flüssigkeiten nach dem Verfahrensweg b) sowie die zur gegebenenfalls erfolgenden weiteren Verdünnung nach Patentanspruch 2 verwendeten Flüssigkeiten sind im allgemeinen organische Lösungsmittel, die von nunmehr beliebiger Natur sein können, aber mit den hochsiedenden organischen Flüssigkeiten verträglich sein müssen.

Derartige Lösungs- und Verdünnungsmittel sinch sehr zahlreich und an sich bekannt, beispielsweise aus der unten genannten "Lackrohstoff-Tabelle" von E. Karsten, so daß die in den Beispielen genannten Stoffe keine begrenzende Aussage machen.

Die gegebenenfalls nach Patentanspruch 2 bei der weiteren Verdünnung abgekühlter Masser zu verwendenden Dispergiervorrichtungen sind an sich in der Lackindustrie bekannte Apparaturen, die durch hohe Drehzahl die Verteilung dispergierbarer Partikel zu stabilen Dispersionen und die Zerteilung sekundärer Agglomerate bewirken. Bevorzugt sind hier Apparaturen, die eine Turbulenz erzeugen oder eine scherende oder schneidende bzw. zerschlagende Wirkung ausüben, die gegebenenfalls durch fördernde Wirkung oder in einem Rohrabschnitt mit darin angeordneten schneidenden, scherenden oder rotierenden Werkzeugen erhöht wird.

Besonders sind beispielsweise sogenannte Dissolver mit auf einer senkrechten, von einem hochtourigen Motor angetriebenen Welle angeordneten Scheiben, Kreissägescheiben bzw. Messern geeignet, sowie sogenannte Ultra-Turrax[(R)]-Rührer und entsprechende Apparaturen.

Die hochmolekularen kristallisierbaren Polyester sollen im allgemeinen teilkristalline Polyester sein, die eine deutlichen Schmelzpunkt innerhalb eines engen Temperaturbereiches von wenigen °C aufweisen. Die Schmelzpunkte dieser kristallisierbaren Polyester sollen im allgemeinen nicht unter etwa 110°C, bevorzugt über 125°C und nur in Ausnahmefällen über 200°C liegen. Bevorzugt liegen die Schmelzpunkte der Polyester zwischen 130 und 180°C, sehr bevorzugt zwischen 150 und 170°C.

Soweit die Sterilisierbarkeit der aus den Polyester-Dispersionen hergestellten Überzüge verlangt wird, hat der Schmelzpunkt der Polyester über der Sterilisiertemperatur zu liegen, die 121°C betragen soll, kann jedoch auch bei etwa 130°C und in Sonderfällen darüber liegen.

Die Glasumwandlungstemperatur der Polyester soll zwischen 15 und etwa 35°C liegen, bevorzugt im Bereich der Zimmertemperatur von 20 bis 30°C.

Als Polyester kommen bezüglich der stofflichen Zusammensetzung solche auf Basis aromatischer Dicarbonsäuren, besonders der Tere- und/oder Isophthalsäure einerseits und der Diole mit 2 bis 12 C-Atomen, besonders unverzweigter Diole andererseits infrage, soweit es sich um kristallisierbare Polyester handelt und die Anforderungen an die Schmelztemperatur und die Glasübergangstemperatur erfüllt sind.

Bevorzugt sind Polyester mit alleinigen oder überwiegenden Gehalten von Terephthalsäure und Tetramethylenglykol und gegebenenfalls bis zu 50 Gew.% weiterer polyesterbildender Derivate. Solche Polyester sind in der DE—AS 23 46 559 beschrieben.

Sehr bevorzugt sind Polyester auf Basis von Terephthalsäure mit Gehalten von 0 bis 50 Mol-% Isophthalsäure einerseits und Tetramethylenglykol andererseits, welche vorteilhaft durch Einkondensation geringer Mengen aliphatischer Dicarbonsäuren und/oder langkettiger Diole mit 6 bis 12 C-Atomen in Mengen bis zu 10 Mol-% einen dieser Monomerenklassen, in ihrer Glastemperatur von etwa 30°C noch etwas abgesenkt werden sollten.

Andersartig zusammengesetzte Polyester, die ebenfalls diesen Anforderungen bezüglich Schmelz- und Glasübergangstemperatur im wesentlichen entsprechen, sollen jedoch nicht ausgeschlossen werden.

Die relativen Viskositäten dieser Polyester (gemessen in einer Konzentration von 1 g Polymer in 100 ml Lösung, wobei das Lösungsmittel aus 60 Gew.-% Phenol und 40 Gew.-% 1,1,2,2-Tetrachloräthen besteht, bei 25°C) sollten zwischen 1,35 und 1,75, vorzugsweise zwischen etwa 1,4 und 1,7 liegen, d.h. in einem Bereich, bei dem die thermoplastischen Eigenschaften dieser Produkte eben voll ausgebildet sind. Zu hochmolekulare Polyesterführen häufig zu Verlaufsschwierigkeiten beim Auftragen der Dispersionen und zu ungenügend glatten Überzügen nach dem Einbrennen.

Produkte mit einer niedrigeren relativen Viskosität sind schwieriger zu handhaben, aber nicht grundsätzlich auszuschließen.

Die hochsiedenden organischen Flüssigkeiten sind im allgemeinen nicht in der Lage, den kristallisierbaren Polyester bei Zimmertemperatur zu lösen, vermögen jedoch den Polyester bei Temperaturen oberhalb des Schmelzpunktes der Polyester zu lösen und dadurch homogene Gemische zu bilden.

Als hochsiedende organische Flüssigkeiten kommen alle Produkte in Betracht, die unter Abschnitt 72.4 der "Lackrohstoff-Tabelle" von E. Karsten, Vincenzt-Verlag, Hannover, angeführt sind, soweit sie die Forderung erfüllen, daß ihr Siedepunkt wenigstens so hoch liegt wie der Schmelzpunkt der zu dispergierbaren Polyester, d.h. im allgemeinen über 160 bis 170°C, bevorzugt über 180°C und im Falle hochschmelzender Polyester über 200°C.

Als hochsiedende organische Flüssigkeiten kommen vor allem Gemische von Alkylaromaten in Frage, wie sie beispielsweise als Solvesso[(R)] 100, 150, 200 der ESSO Chemie oder Shellsol[(R)] AB, E, N und RA erhältlich sind, und 90 bis 99 Gew.-% Alkylaromaten, vor allem hohe Anteile verschiedener Alkylbenzole mit mehreren Methyl- und/oder Äthylgruppen, mit einem Hauptanteil von Alkylbenzolen von 10 C-Atomen enthalten. Weitere hochsiedende organische Flüssigkeiten kommen jedoch ebenfalls in Frage, allein oder in Mischung mit den vorgennten, soweit die Polyester bei höheren Temperaturen darin löslich sind und die Siedepunkte oberhalb der Schmelzpunkte der jeweiliegen Polyester liegen.

Den hochsiedenden organischen Flüssigkeiten können vor oder nach der Dispergierung der Polyester zweckmäßigerweise geeignete Verdickungsmittel zugesetzt werden, um das vorzeitige Absetzen der Polyester-Partikel und/oder der gegebenenfalls zuzusetzenden Pigmente zu vermeiden. Solche Verdickungsmittel sind ebenfalls den bereits genannten "Lackrohstoff-Tabellen" zu entnehmen.

Da es sich als zweckmäßig erwiesen hat, das Einbrennen der Dispersionen in Gegenwart von verätherten Triazinharzen vorzunehmen, genügt es vielfach, derartige Triazinharze, die dann in den verwendeten Alkylaromaten löslich sein müssen, gegebenenfalls zum Anreiben der Pigmenge sowie zum Verdicken der Alkylaromaten zu verwenden.

Den Dispersionen oder ihren Bestandteilen können vor, während oder nach ihrer Herstellung weitere Zusatzstoffe, wie Verlaufsmittel, Farbstoffe, Pigmente, Vernetzungsmittel, Härtungskatalysatoren, in den angewandten Lösungsmitteln lösliche Harze, z.B. Esterharze, usw, zugesetzt werden.

Im allgemeinen sollen die zum Lackieren fertigen Dispersionen Gehalte der Polyester von 25 bis 35 Gew.-% haben.

Die mit Hilfe Dispersionen herstellbaren Zubereitungen können insbesondere zur Herstellung hitzebeständiger, festhaftender Überzüge bzw. Lackierungen von Metallen dienen. Mit besonderem Vorteil können die Dispersionen zur Innenbeschichtung von Konservendosen Verwendung finden, da die hergestellten Lackierungen bei den üblichen Sterilisierungstemperaturen von Lebensmitteln beständig sind und von den in Lebensmittelkonserven enthaltenden Genußsäuren und Salzen nicht angegriffen werden.

Alle Mengenangaben der Bespiele beziehen sich auf Gewichtsteile der jeweiligen Gesamtmischung.

Beispiel 1

60,8 (Gew.-Teile) Dimethylterephthalat und 59 Tetramethylenglykol wurden in Gegenwart von 0,03 Tetrabutyltitanat und Überleiten von Reinst-Stickstoff und Rühren bei Temperaturen bis 185°C umgeestert, bis die Methanolabspaltung beendet war. Sodann wurden entgegen einem starken Stickstoffstrom 22,7 Isophthalsäure sowie 3,0 Azelainsäure zugesetzt und die Reaktion zunächst unter Normaldruck, dann bei einem Vakuum von ca. 50 Torr bei 180 bis 220°C fortgesetzt, bis kein Reaktionswasser und kein freies Tetramethylenglykol mehr überging. Anschließend wurde die Temperatur auf 250°C und das Vakuum auf 0,5—0,1 Torr erhöht. Unter diesen Endbedingungen wurde noch 2 Stunden weitergerührt, dann das Vakuum durch Stickstoff aufgehoben und die Polyesterschmelze ausgegossen. Das Produkt hatte einen Schmelzpunkt (Schmelz-Maximum nach DSC) von 173°C, einen Glasumwandlungs-Temperaturbereich (nach DSC=Differential Scanning Calorimetry) 21—30°C sowie eine relative Lösungsviskosität (1% Polymer in 100 ml Lösung; Lösungsmittel: Phenol/Tetrachloräthan (60/40 Gew.-%), Meßtemperatur 25°C) von 1,44.

50 Gew.-Teile dieses Polyesters wurden in 50 Gew.-Teilen SOLVESSO(R) 150, einem Alkylaromatengemisch der Fa. Esso AG mit einem Siedebereich von 186—212°C, unter Rühren auf 170°C erhitzt, bis eine klare, homogene Flüssigkeit entstanden war. Sodann wurde die Wärmequelle entfernt und das Gemisch unter Rühren allmählich erkalten lassen, bis eine Temperatur von 120°C erreicht war. Während des Abkühlens war zunehmende Trübung infolge der Auskristallisation des Polyesters eingetreten; bei 120°C war die Masse jedoch noch gut fließfähig.

Diese Masse wurde ausgegossen und erstarrte zu einer mit Löffeln, Spachteln oder dgl. streichbaren und zerteilbaren Masse.

200 (Gew.-Teile) dieser Masse, enthaltend 100 Polyester, wurden mit 30 Hexamethoxymethylamin (95 %ig, Maprenal MF 900, Fa. Cassella), und 200 Gew.-Teilen Solvesso 150 mit einem Dissolver verrührt, bis unter dem Mikroskop praktisch keine Partikel mit einem Durchmesser von mehr als 5 Mikron gefunden wurden (ca. 20 min. unter Außenkühlung). Es wurde eine sehr dünnflüssige Dispersion mit ca. 30% Festkörper-Gehalt erhalten. Diese Dispersion wurde auf Weißblech zu etwa 10 Mikron Trockenfilmstärke in 10 min. bei 210°C eingebrannt, wobei ein hochglänzender Klarlackfilm entstand.

Die so beschichteten Bleche wurden 1 Stunde bei 121°C sterilisiert in

a) 1 %iger wässriger Milchsäurelösung bzw.
b) wässriger 3 %iger Kochsalz- +2 %iger Essigsäurelösung bzw.
c) wässriger 0,5 %iger Zitronen- +1 %iger Weinsäurelösung.

Die Überzüge blieben durch diese Behandlung völlig unangegriffen, während Überzüge gemäß DE—OS 18 07 776 und DE—OS 21 26 048, hergestellt aus je einem von insgesamt 3 verschiedenartig zusammengesetzten, jedoch amorphen Polyestern und aus Lösungen statt aus Dispersionen aufgetragen, durchwegs nach diesen Sterilisationstests vermattet und zum Teil rauh oder mit Blasen durchsetzt waren.

Beispiel 2

Beispiel 1 wurde in gleicher Weise wiederholt mit dem Unterschied, daß der bei 120°C gehaltenen Masse im Verlauf von etwa 15 min weitere 100 Gew.-Teile Solvesso 150 portionsweise zugegeben und untergerührt wurden; das in dieser Weise erhaltene Produkt wurde bei einer Temperatur von etwa 100°C ausgegossen und erkalten lassen. Es resultierte eine weiche, pastenartige Masse mit thixotropen Eigenschaften; das tixotrope Verhalten ließ sich durch Zugabe von <5 Gew.-Teilen stark polarer Lösungsmittel, wie Dimethylformamid, im wesentlichen beseitigen, und man erhielt eine Dispersion von applikationsfähiger Konsistenz, die sich unter Verwendung eines Dissolvers zu Aufschlämmungen von diskreten Partikeln mit ca. 5 μm Durchmesser homogenisieren ließ.

Beispiel 3

100 Gew.-Teile Polytetramethylenterephthalat mit einem Schmelzpunkt von 225°C und einer relativen Lösungsviskosität von 1,85 (gemessen wie in Beispiel 1) wurden in 100 Gew.-Teilen Solvesso 200, einem Alkylaromaten-Gemisch mit einem Siedebereich von 236—290°C, bei 210°C homogen gelöst und auf 150°C abgekühlt, bei welcher Temperatur die Masse eben noch rührfähig war. Unter Beibehaltung der Temperatur wurden allmählich 200 Gew.-Teile Äthylenglykoldiacetat unter weiterem Rühren zugesetzt und dann erkalten gelassen. Nach der Behandlung dieser Masse mit einem Dissolven wurden Partikel-Durchmesser von ca. 5—10 μm erhalten. Das Äthylenglykoldiacetat ließ sich durch gleiche Mengen Propylenglykol-1,2, 3-Methoxybutylacetat, Butyldiglykol und Isophoron ersetzen, ohne daß der Partikel-Durchmesser dadurch erkennbar beeinflußt wurde.

Beispiel 4 (Vergleich)

Der Polyester des Beispiels 1 wurde mit 60 Gew.-Teilen Solvesso 150 je 100 Gew.-Teile Polyester bei 170°C klar gelöst und danach auf 150°C abgekühlt, bei welcher Temperatur die Mischung eben noch rühr- und fließfähig war. Sodann wurden unter Beibehaltung der Temperatur allmählich 150 Gew.-Teile α) weiteres Solvesso 150 bzw. β) Testbenzin mit einem Siedebereich von 185—220°C untergerührt und die Gemische erkalten gelassen. Nach der Dispergierung mittels eines Dissolvers und Zusatz weiterer Lösungsmittel wurden Partikel-Durchmesser von ca. 20 μm gefunden, die sich mittels des Dissolvers nicht weiter zerkleinern ließen. Diese Dispersionen setzten sich in <1 Stunde weitgehend ab und ließen sich folglich nicht als Lackrohstoffe verwenden.

**Patentansprüche**

1. Verfahren zur Herstellung von stabilen Dispersionen durch Auflösen von kristallisierbaren Hochpolymeren in Flüssigkeiten bei erhöhter Temperatur und anschließendes Abkühlen der erhaltenen Lösungen, dadurch gekennzeichnet, daß man als kristallisierbare Hochpolymere lineare, gesättigte Polyester und als Flüssigkeiten hochsiedende organische Flüssigkeiten, deren Siedepunkt bei oder über dem Schmelzpunkt der Polyester liegt, verwendet, wobei das Gewichtsverhältnis von Polyester zu den hochsiedenden organischen Flüssigkeiten zwischen 40/60 und 60/40 beträgt, und den Polyester in der hochsiedenden Flüssigkeit auf eine Temperatur, die bei oder oberhalb des Schmelzpunktes des Polyesters, aber unterhalb der Siedetemperatur der hochsiedenden Flüssigkeit liegt, bis zur Bildung der homogenen Phase erhitzt und unter Rühren soweit abkühlt, daß das Material noch rühr- oder fließfähig ist, und darauf entweder

a) ohne weiteres Rühren das Material abkühlen und erstarren läßt oder
b) bevor oder während eine weitere Abkühlung erfolgt, das rühr- oder fließfähige Material unter Rühren mit weiteren Mengen der hochsiedenden organischen Flüssigkeiten oder mit damit mischbaren Flüssigkeiten, gegebenenfalls unter Verwendung bekannter Dispergiervorrichtungen, verdünnt.

2. Verfahren nach Anspruch 1, dadurch gekennzeichnet, daß man die gänzlich oder im wesentlichen abgekühlten Massen, gegebenenfalls unter Verwendung von bekannten Dispergiervorrichtungen, weiter verdünnt.

3. Verfahren nach den Ansprüchen 1 oder 2, dadurch gekennzeichnet, daß die relative Viskosität der kristallisierbaren Polyester zwischen 1,35 und 1,75 liegt.

4. Verfahren nach einem der Ansprüche 1 bis 3, dadurch gekennzeichnet, daß der Schmelzpunkt der Polyester zwischen 110 und 200°C liegt.

5. Verfahren nach mindestens einem der Ansprüche 1 bis 4, dadurch gekennzeichnet, daß als hochsiedende organische Flüssigkeiten Gemische von Alkylaromaten verwendet werden.

6. Verwendung der nach den Ansprüchen 1 bis 5 hergestellten Dispersionen also Bestandteil von Lacken für die Lackierung von Metall.

**Revendications**

1. Procédé de préparation de dispersions stables par dissolution de hauts polymères cristallisables dans des liquides à température élevée puis refroidissement des solutions obtenues, procédé caractérisé en ce qu'on utilise comme hauts polymères cristallisables des polyesters saturés linéaires et, comme liquides, des liquides organiques à point élevé d'ébullition, dont le point d'ébullition se situe au point de fusion, ou au-dessus du point de fusion, du polyester, le rapport pondéral du polyester aux liquides organiques à point élevé d'ébullition se situant entre 40/60 et 60/40, et l'on chauffe le polyester dans le liquide à point élevé d'ébullition jusqu'à une température égale ou supérieure au point de fusion du polyester mais inférieure à la température d'ébullition du liquide à point élevé d'ébullition, jusqu'à formation de la phase homogène et l'on refroidit sous agitation jusqu'à ce que la matière soit encore agitable ou versable, puis

a) on laisse refroidir et se solidifier la matière sans l'agiter davantage, ou
b) avant ou pendant que se produit un refroidissement supplémentaire, on dilue sous agitation la matière encore agitable ou versable en lui ajoutant des quantités supplémentaires de liquides organiques à point élevé d'ébullition ou de liquides qui y sont miscibles, éventuellement en utilisant des appareils connus pour mise en dispersion.

2. Procédé selon la revendication 1, caractérisé en ce qu'on dilue encore les masses entièrement ou essentiellement refroidies, éventuellement en utilisant des appareils connus pour l'obtention de dispersions.

3. Procédé selon les revendications 1 ou 2, caractérisé en ce que la viscosité relative du polyester cristallisable se situe entre 1,35 et 1,75.

4. Procédé selon l'une des revendications 1 à 3, caractérisé en ce que le point de fusion du polyester se situe entre 110 et 200°C.

5. Procédé selon l'une au moins des revendications 1 à 4, caractérisé en ce qu'on utilise comme liquides organiques à point élevé d'ébullition des mélanges d'hydrocarbures alkyl-aromatiques.

6. Utilisation des dispersions, préparées selon les revendication 1 à 5, comme constituants de vernis pour le vernissage de métaux.

**Claims**

1. Process for the production of stable dispersions by dissolution of crystallizable high polymers in liquids at elevated temperature and then cooling of the solutions obtained, characterised in that linear saturated polyesters are used as crystallizable high polymers and high boiling organic liquids, whose boiling point lies at or above the melting point of the polyester are used as liquids, with the weight ratio of polyester to the high boiling organic liquid amounting to between 40/60 and 60/40, and the polyester being heated in the high boiling liquid to a temperature which lies at or above the melting point of the polyester but below the boiling temperature of the high boiling liquid until formation of the homogeneous phase and cooled under stirring insofar as the material is still stirrable or flowable, and then either

(a) without further stirring the material cooling it and allowing it to solidify or
(b) before or while a further cooling takes place, the still stirrable or flowable material is diluted while subject to stirring with further amount of the high boiling organic liquids or with liquids missible therewith, optionally while using known dispersion arrangements.

2. Process according to Claim 1, characterised in that the completely or substantially cooled masses are further diluted optionally with use of known dispersion apparatuses.

3. Process according to Claims 1 or 2, characterised in that the relative viscosity of the crystallizable polyester lies between 1.35 and 1.75.

4. Process according to one of Claims 1 to 3, characterised in that the melting point of the polyester lies between 110 and 200°C.

5. Process according to at least one of Claims 1 to 4, characterised in that mixtures of alkyl aromatics are used as high boiling organic liquids.

6. Use of the dispersions produced by Claims 1 to 5 as component of lacquers for the lacquering of metal.